# EUROPEAN PATENT APPLICATION

(11) **EP 4 450 832 A1**
(43) Date of publication of application: **23.10.2024**
(21) Application number: 22906993.5
(22) Date of filing: 14.10.2022
(51) Int. Cl.: F15B 15/10, B25J 15/12

(54) **GRIPPING DEVICE**

(30) Priority: 15.12.2021 JP 2021203536
(71) Applicant: BRIDGESTONE CORPORATION, Chuo-ku Tokyo 104-8340 (JP)
(72) Inventor: OONO, Shingo, Chuo-ku, Tokyo (JP); YASUI, Hitoshi, Chuo-ku, Tokyo (JP); NAKAKITA, Yukinori, Chuo-ku, Tokyo (JP)
(74) Representative: Marks & Clerk LLP
(86) International application number: PCT/JP2022/038442
(87) International publication number: WO 2023/112458

(57) **Abstract**

The grasping device 1 is a grasping device using a plurality of fluid pressure actuators 10 which are curved during contraction. In the bottom view of the grasping device 1, a tip portion of the fluid pressure actuator 10 overlaps with a tip portion of another fluid pressure actuator 10 when each of the fluid pressure actuators 10 contracts.

## Description

### [Technical Field]

The present disclosure relates to a grasping device using a fluid pressure actuator that curves (curls) during contraction.

### [Background Art]

Conventionally, a structure (so-called McKibben type) having a rubber tube that expands and contracts by air pressure and a sleeve that covers the outer peripheral surface of the tube has been widely used as a fluid pressure actuator that expands and contracts the tube using gas or liquid.

Such a McKibben type fluid pressure actuator also has a known structure that curves (curls) during contraction (see Patent Literature 1). Specifically, Patent Literature 1 discloses a grasping device for grasping an object (which may be called a workpiece) by using a plurality of such fluid pressure actuators.

### [Citation List]

### [Patent Literature]

[Patent Literature 1]
Japanese Patent Laid-Open No. 2021-088999

### [Summary of Invention]

However, the above-described grasping device using a fluid pressure actuator has the following problems. Specifically, depending on the shape of the object, the object tends to spill out from the tip of the curled fluid pressure actuator.

Accordingly, the following disclosure is made in view of such a situation, and it is an object of the present invention to provide a grasping device capable of more reliably grasping an object while using a fluid pressure actuator that curves (curls) during contraction.

An embodiment of the present disclosure is a grasping device (For example, grasping device 1) using a plurality of fluid pressure actuators (fluid pressure actuators 10) that are curved during contraction. the fluid pressure actuators are a soft actuator. In a bottom view of the grasping device, a tip portion (tip portion 300) of the fluid pressure actuator overlaps with a tip portion of a other fluid pressure actuator when each of the fluid pressure actuators contracts.

### [Brief Description of Drawings]

[FIG. 1] FIGS. 1 (a) and 1(b) are a schematic perspective view of a grasping device 1 according to the present embodiment and a schematic front view of a robot arm 2 including the grasping device 1.
[FIG. 2] FIGS. 2 (a) and 2 (b) are a schematic side view and a schematic bottom view of the grasping device 1.
[FIG. 3] FIG. 3 is a side view of a fluid pressure actuator 10.
[FIG. 4] FIG. 4 is a cross-sectional view of an actuator body portion 100 along a radial direction D_{R}.
[FIG. 5] FIG. 5 is an explanatory view of the behavior of the fluid pressure actuator 10.
[FIG. 6] FIGS. 6 (a) and 6 (b) are schematic side views and schematic bottom views of a grasping device 1A.
[FIG. 7] FIGS. 7 (a) and 7 (b) are schematic side views and schematic bottom views of a grasping device 1B.
[FIG. 8] FIGS. 8 (a) and 8 (b) are schematic side views and schematic bottom views of a grasping device 10.
[FIG. 9] FIGS. 9 (a)and 9 (b) are schematic side views and schematic bottom views of a grasping device 1D.

### [Description of Embodiments]

Hereinafter, an embodiment will be described based on the drawings. The same functions and structures are denoted by the same or similar reference numerals, and the description thereof will be omitted accordingly.

### (1) Overall schematic configuration of the grasping device

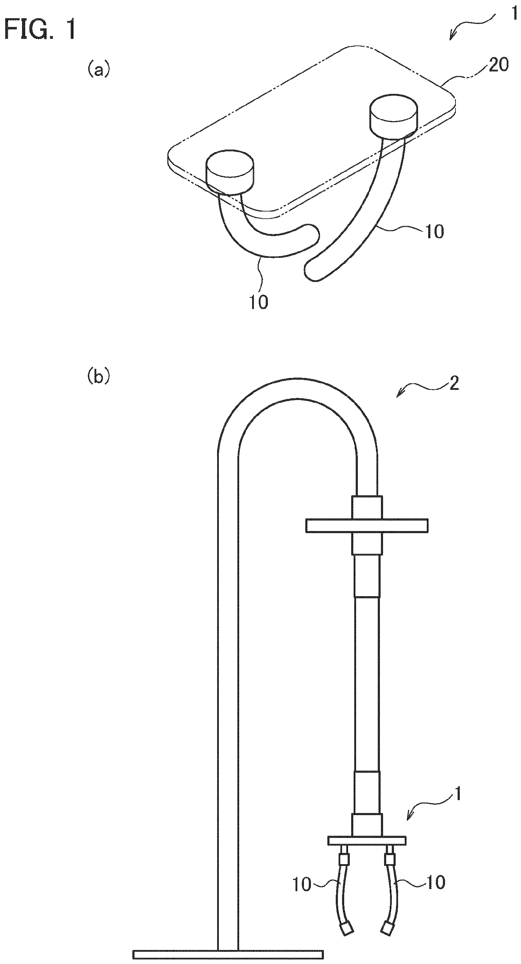

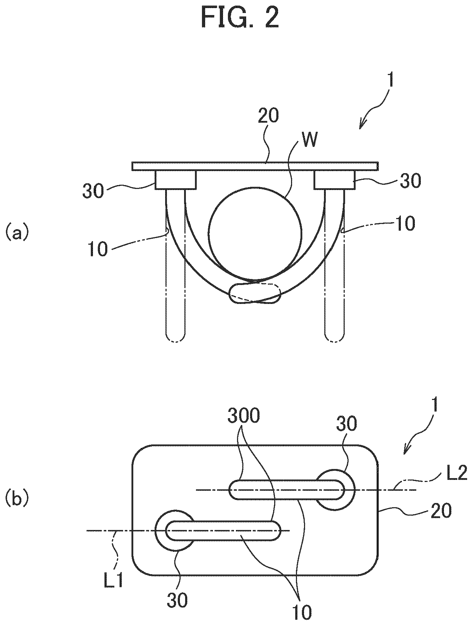

FIGS. 1 (a) and 1 (b) are schematic perspective views of the grasping device 1 according to the present embodiment and a schematic front view of the robot arm 2 including the grasping device 1. FIGS. 2 (a) and 2 (b) are schematic side views and schematic bottom views of the grasping device 1. FIGS. 1 and 2 are schematic views, and the shape of the fluid pressure actuator 10 and the like are simplified.

The grasping device 1 uses a plurality of fluid pressure actuators 10 that curve (curl) during contraction. The grasping device 1 can grasp an object W (which may be called a workpiece) using the plurality of fluid pressure actuators 10 (soft actuators that can curve and have flexibility). The grasping device 1 may be used as a robot hand or the like and may be included in a robot arm 2.

In the grasping device 1, two fluid pressure actuators are provided so as to face each other. Specifically, by contracting the two fluid pressure actuators 10, the two fluid pressure actuators 10 can grasp the object W, in other words, hold the object W. FIGS. 1 and 2 show the fluid pressure actuator 10 in a curved state.

The fluid pressure actuator 10 is attached to a mounting portion 30 provided on a mounting base 20. The mounting base 20 may be supported by an arm or a support (not shown).

In the bottom view of the grasping device 1 (see FIG. 2 (b)), a tip portion 300 of the fluid pressure actuator overlaps with the tip portion 300 of another fluid pressure actuator when each fluid pressure actuator contracts.

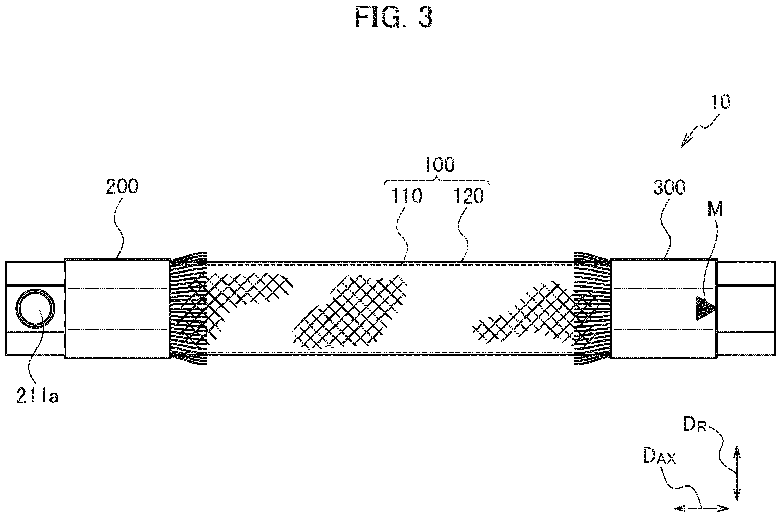

As shown in FIG. 2 (b), in the bottom view of the grasping device 1, each fluid pressure actuator is provided such that a straight line L1 along the axial direction D_{AX} (see FIG. 3) of the fluid pressure actuator avoids crossing the straight line L2 along the axial direction of another fluid pressure actuator. That is, the tip portion 300 of the fluid pressure actuator is provided so as not to interfere with the tip portion 300 of the opposing fluid pressure actuator even if it contracts.

The position of the mounting portion 30, in other words, the proximal end portion 200 (Not shown in FIG. 1, see FIG. 3) of the fluid pressure actuator is offset from the position of the proximal end portion 200 of the opposing fluid pressure actuator in the axial direction D_{AX} of the fluid pressure actuator.

As described above, in the grasping device 1, two fluid pressure actuators are provided so as to face each other, but the number of fluid pressure actuators constituting the grasping device is not particularly limited.

Depending on the shape and size of the object W, the number of fluid pressure actuators constituting the grasping device is preferably two or more and four or less.

### (2) Schematic configuration of the fluid pressure actuator

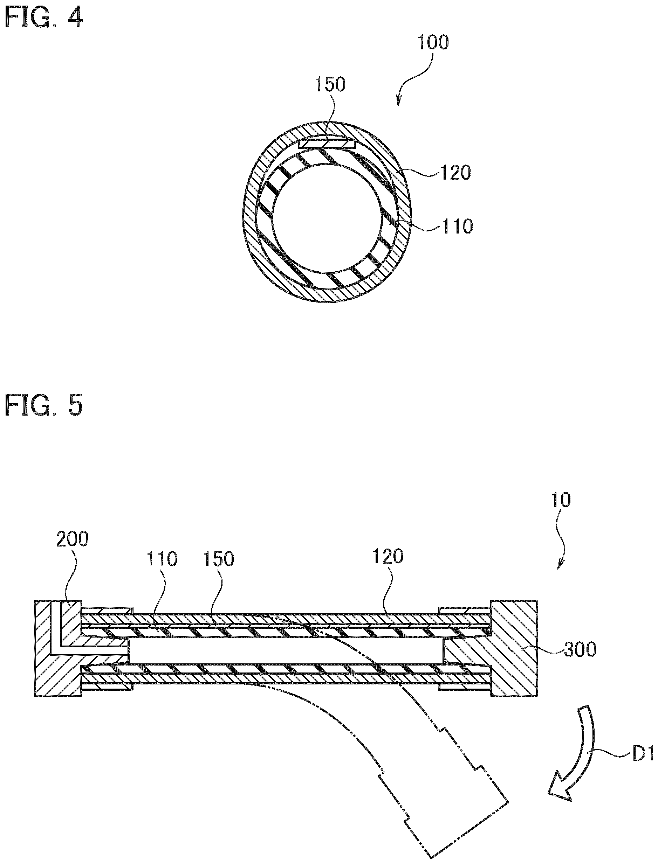

FIG. 3 is a side view of the fluid pressure actuator 10 according to the present embodiment. FIG. 4 is a cross-sectional view of the actuator body portion 100 along the radial direction D_{R}.

The fluid pressure actuator 10 has an actuator body portion 100, a proximal end portion 200 and a tip portion 300.

The actuator body portion 100 is composed of a tube 110 and a sleeve 120. Fluid flows into the actuator body portion 100 through the connection port 211a.

As a basic characteristic, the actuator body portion 100 contracts in the axial direction D_{AX} of the actuator body portion 100 and expands in the radial direction D_{R} due to fluid flow into the tube 110. The actuator body portion 100 expands in the axial direction D_{AX} of the actuator body portion 100 and contracts in the radial direction D_{R} due to fluid flow out of the tube 110. Due to the shape change of the actuator body portion 100, the fluid pressure actuator 10 functions as an actuator.

In the present embodiment, while using a McKibben type fluid pressure actuator having such basic characteristics, by providing a (may be referred to as regulating or restricting) restricting member 150 (Not shown in FIG. 3, see FIGS. 4, 5, etc.) that restricts compression of the axial direction D_{AX}, it can be curved (curled) in an orthogonal direction orthogonal to the axial direction D_{AX}, that is, in the radial direction D_{R}.

The fluid used to drive the fluid pressure actuator 10 may be either a gas such as air or a liquid such as water or mineral oil, but in particular, the fluid pressure actuator 10 may have high durability to withstand hydraulic drive with high pressure applied to the actuator body portion 100.

The connection port 211a is attached to a drive pressure source for the fluid pressure actuator 10, specifically a hose (pipeline) connected to a gas or liquid compressor. The fluid that flows through the connection port 211a flows through the passage hole (not shown) into the actuator body portion 100, specifically into the tube 110.

The tube 110 is a cylindrical body that expands and contracts under the pressure of the fluid. The tube 110 is made of an elastic material such as butyl rubber in order to repeatedly contract and expand by the fluid. When the fluid pressure actuator 10 is hydraulically driven, it is preferable that it be at least one kind selected from the group consisting of NBR (nitrile rubber), chloroprene rubber, and epichlorohydrin rubber having high oil resistance.

The sleeve 120 is cylindrical and covers the outer peripheral surface of the tube 110. The sleeve 120 is a stretchable structure in which fiber cords oriented in a predetermined direction are woven, and a rhombic shape is repeated by crossing the oriented cords. By having such a shape, the sleeve 120 deforms pantographically and follows the tube 110 while restricting its contraction and expansion.

As a cord constituting the sleeve 120, a fiber cord of an aromatic polyamide (aramid fiber) or polyethylene terephthalate (PET) is preferably used. However, it is not limited to this kind of fiber cord, and for example, a cord of a high-strength fiber such as a PBO fiber (polyparaphenylene benzobisoxazole) may be used.

In this embodiment, the restricting member 150 is provided between the tube 110 and the sleeve 120.

The restricting member 150 is not compressed in the axial direction D_{AX}, and can be deformed only along the radial direction D_{R} (which may be called the deflection direction). That is, the restricting member 150 resists compression along the axial direction D_{AX} and is deformable in an orthogonal direction (radial direction D_{R}) orthogonal to the axial direction D_{AX}.

In other words, the restricting member 150 has a characteristic that is difficult to deform along the axial direction D_{AX} and deflects along the radial direction D_{R}. Deformable may be alternatively referred to as curving or curling.

The restricting member 150 also has a function of restricting (restraining) the expansion of the tube 110 (and the sleeve 120) to the radial direction D_{R} outside at a position on the outer periphery of the tube 110 where the restricting member 150 is provided.

In this embodiment, the restricting member 150 is provided from one end side to the other end side of the axial direction D_{AX} in the space of inside of the sleeve 120, specifically, the radial inside of the sleeve 120. In this embodiment, the restricting member 150 is formed by using a leaf spring.

The size of the leaf spring may be selected according to the size of the fluid pressure actuator 10, the required generating force, etc., and is not particularly limited. The material of the leaf spring is also not particularly limited, but typically it may be a material that is easy to curve and resistant to compression, such as a metal such as stainless steel. For example, the restricting member 150 may be formed of a thin sheet of carbon fiber reinforced plastic (CFRP) or the like. Since the CFRP is less likely to undergo plastic deformation than a metal, it is easy for the fluid pressure actuator 10 to return to its original straight state after curving.

The proximal end portion 200 is located on the side of the mounting portion 30 (see FIGS. 2 (a) and 2 (b)) of the mounting base 20. The connection port 211a described above is formed on the proximal end portion 200. The proximal end portion 200 may include a mechanism for sealing one end of the axial direction D_{AX} of the actuator body portion 100.

The tip portion 300 is located on the opposite side of the mounting portion 30 of the mounting base 20. The tip portion 300 may include a mechanism for sealing the other end of the axial direction D_{AX} of the actuator body portion 100.

The sealing mechanism of the actuator body portion 100 provided in the proximal end portion 200 and the tip portion 300 may be similar to, for example, the fluid pressure actuator disclosed in Japanese Patent Laid-Open Publication No. 2021-088999. In addition, the tip portion 300 may be covered with a rubber sack or the like for the purpose of preventing sliding when the object W is grasped.

### (3) Behavior of the fluid pressure actuator 10

FIG. 5 is an explanatory view of the behavior of the fluid pressure actuator 10. In the fluid pressure actuator 10 shown in FIG. 5, the proximal end portion 200 side is fixed, and the tip portion 300 side is freely movable. That is, the proximal end portion 200 side is a fixed end, and the tip portion 300 side is a free end.

As described above, when the fluid flows into the fluid pressure actuator 10, it attempts to contract in the axial direction D_{AX}, but since the restricting member 150 is provided, the contraction along the axial direction D_{AX} is restricted (constrained).

That is, the restricting member 150 formed by a rigid member such as a leaf spring serves as a backbone, and expands in the radial direction D_{R} outside on the opposite side (lower side in FIG. 5) to the position on the outer periphery of the tube 110 and sleeve 120 where the restricting member 150 is provided, thereby shortening the dimension of the fluid pressure actuator 10 in the axial direction D_{AX} and deflecting the fluid pressure actuator 10 (Specifically, the actuator body portion 100) along the direction D1. Note that the direction D1 may be called a flexible direction. In order to make it easy to recognize that the fluid pressure actuator 10 is bent in the direction D1, a mark M (see FIG. 3) may be provided to indicate the position where the restricting member 150 is provided.

The restricting member 150 is provided between the rubber made tube 110 and the sleeve 120, resists compression in the axial direction D_{AX}, is deformable along the orthogonal direction (radial direction D_{R}) orthogonal to, and is arranged in a part in the circumferential direction of the actuator body portion 100.

That is, when the actuator body portion 100 (McKibben) attempts to contract along the axial direction D_{AX} due to the inflow (pressurization) of fluid into the actuator body portion 100, the portion of the restricting member 150 has high compressive rigidity, and therefore, the portion where the restricting member 150 is arranged cannot contract. On the other hand, since the portion of the other actuator body portion 100 attempts to contract, a force in the curving direction along the orthogonal direction (radial direction D_{R}) is generated, and the portion is curved with the restricting member 150 as the back face.

### (4) Modified example

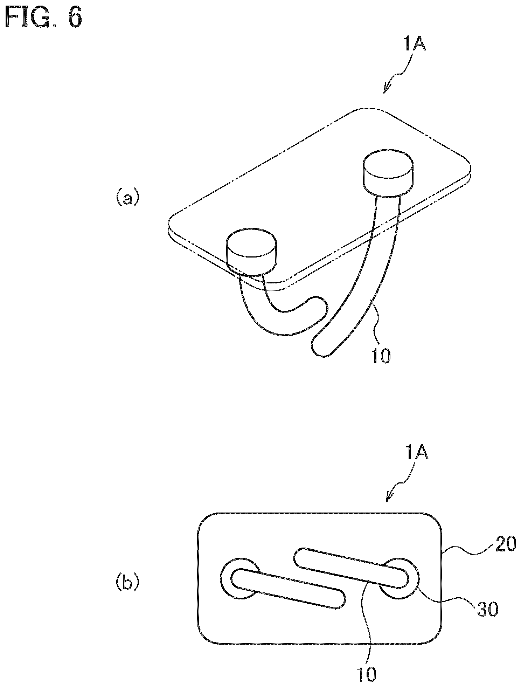

Next, modified example of the grasping device 1 will be described. FIGS. 6 (a) and 6 (b) are schematic side views and schematic bottom views of the grasping device 1A.

As shown in FIGS. 6 (a) and 6 (b), in the grasping device 1A, as in the grasping device 1, the position of the mounting portion 30, that is, the proximal end portion 200 (see FIG. 3) of the fluid pressure actuator is offset from the position of the proximal end portion 200 of the opposing fluid pressure actuator in the axial direction D_{AX} of the fluid pressure actuator.

However, in the grasping device 1A, in the bottom view of the grasping device 1, the fluid pressure actuator may be provided in an inclined state with respect to the mounting base 20. According to the grasping device 1A, by devising the flexible direction of the fluid pressure actuator, it is possible to contribute to downsizing of the device.

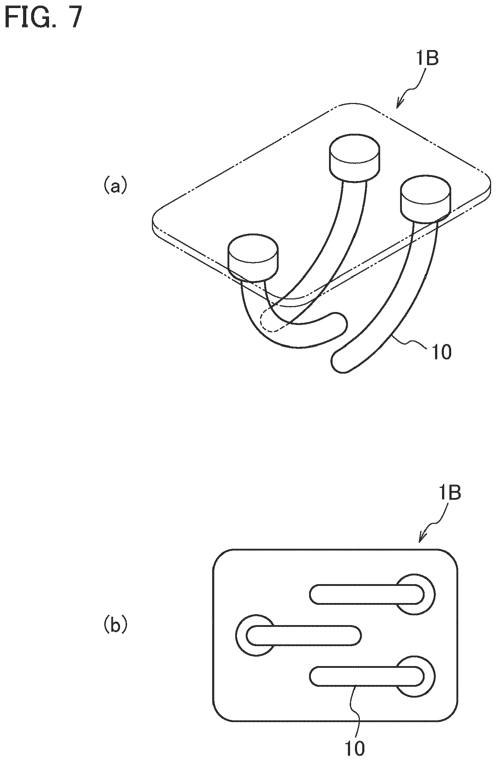

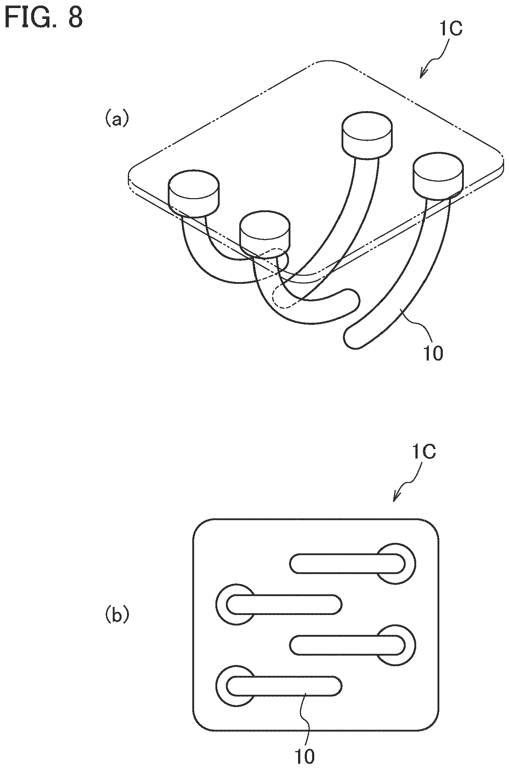

FIGS. 7 (a) and 7 (b) are schematic side views and schematic bottom views of the grasping device 1B. FIGS. 8 (a) and 8 (b) are schematic side views and schematic bottom views of the grasping device 10. Three fluid pressure actuators are used in the grasping device 1B, and four fluid pressure actuators are used in the grasping device 10. As described above, the number of fluid pressure actuators constituting the grasping device is not particularly limited, but each fluid pressure actuator is provided so as to face at least one of the other fluid pressure actuators.

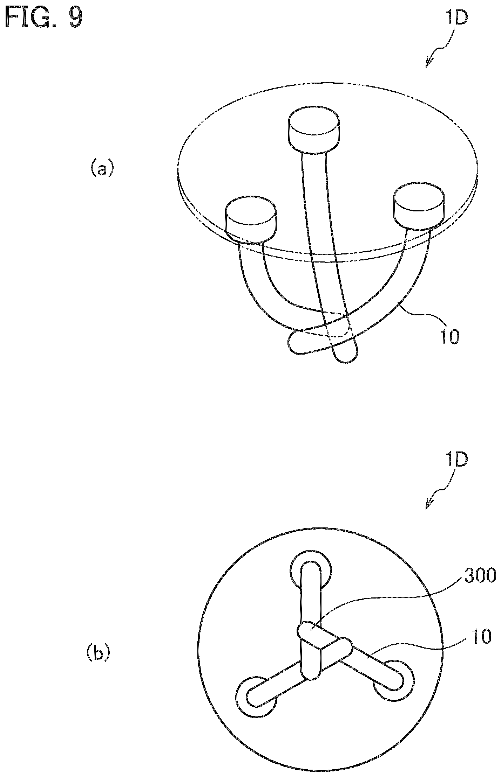

FIGS. 9 (a)and 9 (b) are schematic side views and schematic bottom views of the grasping device 1D. In the grasping device 1D, three fluid pressure actuators are provided so as to intersect (overlap) each other.

Specifically, the mounting portion 30, that is, the proximal end portion 200 of each fluid pressure actuator may be provided at equal intervals (equal angles) on the circumference in the bottom view of the grasping device 1D. The proximal end portions 200 may be provided on the circumference having the same radius from the center.

When the fluid pressure actuator contracts, the tip portion 300 of each fluid pressure actuator move toward a position offset from the center of the arc forming the circumference. Therefore, the tip portion 300 of each fluid pressure actuator can intersect each other without interference.

### (5) Function and Effects

According to the above-described embodiment, the following function and effects can be obtained. Specifically, according to the grasping device including modified example described above, the tip portion 300 of the fluid pressure actuator overlaps with the tip portion 300 of the other fluid pressure actuators when each of the fluid pressure actuators contracts.

Therefore, the object W hardly spills out from the tip portions 300 of the curled fluid pressure actuators. That is, according to the grasping device described above, the object W can be grasped more securely while using the fluid pressure actuators that curves (curls) during contraction.

Further, each of the fluid pressure actuators is provided such that a straight line L1 along the axial direction D_{AX} (see FIG. 3) of the fluid pressure actuator avoids crossing the straight line L2 along the axial direction of another fluid pressure actuator in the bottom view of the grasping device 1. Therefore, the tip portion 300 of the fluid pressure actuator does not interfere with the tip portion 300 of the opposing fluid pressure actuator even if it contracts, and a sufficient overlap region between the fluid pressure actuators can be ensured.

Further, in the grasping device 1D, the proximal end portion 200 of each fluid pressure actuator is provided on the circumference in the bottom view of the grasping device 1D, and when the fluid pressure actuator contracts, the tip portion 300 of each fluid pressure actuator is directed to a position offset from the center of the arc forming the circumference. Therefore, since the tip portions 300 of each fluid pressure actuator can intersect each other without interference, spillage of the object W can be more reliably prevented.

### (6) Other embodiments

Although the embodiments have been described above, they are not limited to the description of the embodiments, and it is obvious to those skilled in the art that various modifications and improvements can be made.

In the above-described embodiment, the flexibility of the fluid pressure actuator is ensured using the restricting member 150, but the flexibility of the fluid pressure actuator may be ensured by another structure. For example, by providing a flexible frame material having a part of a bellows shape around the fluid pressure actuator, when the fluid pressure actuator contracts, the fluid pressure actuator is curved such that the bellows portion faces toward an inside.

Although the present disclosure has been described in detail above, it is clear to those skilled in the art that the present disclosure is not limited to the embodiments described herein. The present disclosure may be implemented in a modified and modified manner without departing from the object and scope of the present disclosure as determined by the description of the scope of claims. Accordingly, the description of the present disclosure is for illustrative purposes and does not have any restrictive meaning to the present disclosure.

### [Reference Signs List]

1, 1A, 1B, 1C, 1D Grasping devices
2 Robot arm
10 Fluid pressure actuator
20 Mounting base
30 Mounting portion
100 Actuator body portion
110 Tube
120 Sleeve
150 Restricting member
200 Proximal end portion
211a Connection port
300 Tip portion
W Object

## Claims

1. A grasping device using a plurality of fluid pressure actuators that are curved during contraction, wherein
the fluid pressure actuators are a soft actuator,
in a bottom view of the grasping device, a tip portion of the fluid pressure actuator overlaps with a tip portion of a other fluid pressure actuator when each of the fluid pressure actuators contracts.

2. The grasping device according to claim 1, the fluid pressure actuators comprise:
a tube that is cylindrical and expands and contracts under fluid pressure; and
a sleeve having a stretchable structure in which fiber cords oriented in a predetermined direction are woven and that covers an outer peripheral surface of the tube.

3. The grasping device according to claim 1, wherein each of the fluid pressure actuators is provided such that, in a bottom view of the grasping device, a straight line along an axial direction of the fluid pressure actuator avoids intersection with a straight line along an axial direction of the other fluid pressure actuator.

4. The grasping device according to claim 1, wherein
an proximal end portion of each of the fluid pressure actuators is provided a circumference in a bottom view of the grasping device, and
an tip portion each of the fluid pressure actuators is directed to a position offset from a center of an arc forming the circumference when the fluid pressure actuator contracts.

5. The grasping device according to any one of claims 1 to 4, wherein the number of the fluid pressure actuators is two or more and four or less.

6. The grasping device according to claim 2, wherein the fluid pressure actuator comprises a restricting member provided inside in the sleeve from one end to another end in the axial direction of the tube.
